# DEMANDE DE BREVET EUROPEEN

(11) **EP 1 249 437 A1**
(43) Date de publication de la demande: **16.10.2002**
(21) Numéro de dépôt: 02290866.9
(22) Date de dépôt: 08.04.2002
(51) Int. Cl.: C05F 17/02, B65F 1/14, E04C 2/42

(54) **Bac destiné à la collecte de déchets, notamment de compost**

(30) Priorité: 09.04.2001 FR 0104805
(71) Demandeur: COMPAGNIE PLASTIC OMNIUM, 69007 Lyon (FR)
(72) Inventeur: Brazier, Emmanuel, 52200 Langres (FR); Dufour, David, 52200 Langres (FR); Obriot, Denis, 52600 Heuilley-Cotton (FR)
(74) Mandataire: Leszczynski, André

(57) **Abrégé**

Bac destiné à la collecte de déchets de compost, équipé d'une grille de fond de cuve ayant des orifices notamment de section polygonale.

L'invention est relative à un bac destiné à la collecte de déchets (1), notamment de compost, comportant une grille en matière plastique de fond de cuve (3).
Ladite grille (3) est traversée par une pluralité d'orifices (11) de section généralement polygonale, avec un nombre de côtés compris entre cinq et douze

## Description

La présente invention a pour objet un bac destiné à la collecte de déchets, notamment de compost, comportant une grille de fond de cuve en matière plastique.

Une telle grille sert à la décantation et à l'aération des déchets et s'étend à une certaine hauteur de la paroi de fond de la cuve.

On connaît une grille présentant une face supérieure plane, traversée par des orifices circulaires, et dont l'épaisseur est relativement importante afin de pouvoir supporter le poids des déchets.

La présente invention vise à améliorer les bacs existants, et notamment les grilles de fond de cuve équipant ces bacs.

L'invention a ainsi pour objet un nouveau bac destiné à la collecte de déchets, notamment de compost, comportant une grille en matière plastique de fond de cuve, qui de manière caractéristique est traversée par une pluralité d'orifices de section généralement polygonale, avec un nombre de côtés compris entre cinq et douze.

Grâce à l'invention, la surface ajourée de la grille peut être relativement importante, supérieure à celle qui serait obtenue avec des orifices circulaires. Le pouvoir d'aération de la grille s'en trouve augmenté.

De plus, la section généralement polygonale des orifices permet de limiter les contraintes résiduelles venues de moulage au sein de la grille.

Enfin, le nombre de côtés étant supérieur ou égal à cinq, les orifices sont dépourvus d'angles aigus et, par conséquent, le risque d'accrochage des déchets est réduit.

Dans une mise en oeuvre particulière de l'invention, la grille comporte une pluralité d'orifices de section généralement hexagonale.

Toujours dans une mise en oeuvre particulière, l'aire totale occupée par les orifices de la grille est supérieure à celle occupée par les régions pleines de la grille.

De préférence, la face supérieure de la grille comporte des reliefs faisant saillie vers le haut, au-dessus du plan des orifices. De tels reliefs tendent à limiter le colmatage des orifices par des sacs introduits dans le bac.

La grille peut ainsi comporter des nervures qui bordent au moins partiellement au moins certains orifices, et qui de préférence entourent chacune un orifice et sont alignées avec le bord de l'orifice correspondant.

La hauteur des reliefs de la face supérieure de la grille est de préférence comprise entre 1 et 10 mm, de préférence entre 2 et 8 mm, une hauteur trop faible rendant les reliefs inefficaces et une hauteur trop importante augmentant les risques d'accrochage des déchets.

Dans une mise en oeuvre particulière de l'invention, la grille comporte des nervures de rigidification sur sa face inférieure, ces nervures étant avantageusement situées en retrait du bord des orifices. Ainsi, elles ne favorisent pas le coincement de déchets dans les orifices de la grille.

Dans une mise en oeuvre particulière de l'invention, aucun des orifices n'est, isolément, complètement entouré par ces nervures de rigidification, ce qui réduit encore le risque de coincement des déchets dans les orifices de la grille.

La grille peut comporter sensiblement en son centre, sur sa face inférieure, une nervure centrale généralement circulaire, à laquelle se raccordent des nervures de rigidification s'étendant sensiblement jusqu'aux bords de la grille. Cette nervure centrale peut entourer des orifices qui sont des hexagones tronqués et une partie centrale pleine qui sert à recevoir des indications concernant la fabrication de la grille, par exemple.

Dans une réalisation particulière, la grille comporte des parties pleines de forme généralement hexagonale, au-dessus de pieds destinés à reposer contre la paroi de fond du bac.

La grille peut comporter six pieds par exemple.

Les nervures de rigidification présentes sur la face inférieure de la grille se raccordent avantageusement au moins à une partie de ces pieds, et de préférence à l'ensemble des pieds.

Dans une réalisation particulière, la grille comporte sur deux côtés opposés des passages pour accueillir des axes d'articulation fixés aux parois du bac et permettant à la grille de pivoter lorsqu'elle est en place dans le bac lors du lavage de celui-ci.

Les nervures réalisées sur les faces supérieure et/ou inférieure de la grille comportent avantageusement des bords chanfreinés, afin de ne pas accrocher les déchets.

Le bac comporte avantageusement des parois ajourées permettant le passage de l'air pour l'aération des déchets.

L'invention a encore pour objet une grille destinée à équiper un bac tel que défini plus haut.

D'autres caractéristiques et avantages de la présente invention apparaîtront à la lecture de la description détaillée qui va suivre, d'un exemple de réalisation non limitatif de l'invention, et à l'examen du dessin annexé, sur lequel :
- la figure 1 représente schématiquement en perspective un bac conforme à l'invention, avec arrachement des parois du bac faisant apparaître la grille de fond de cuve,

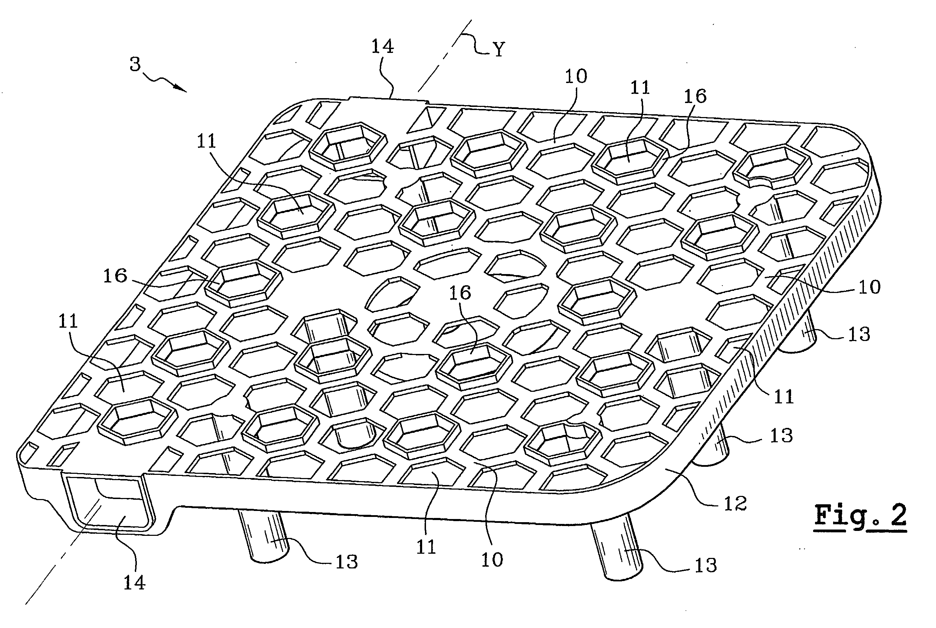

- les figures 2 et 3 représentent schématiquement, en vue en perspective de dessus et de dessous respectivement, la grille de la figure 1,

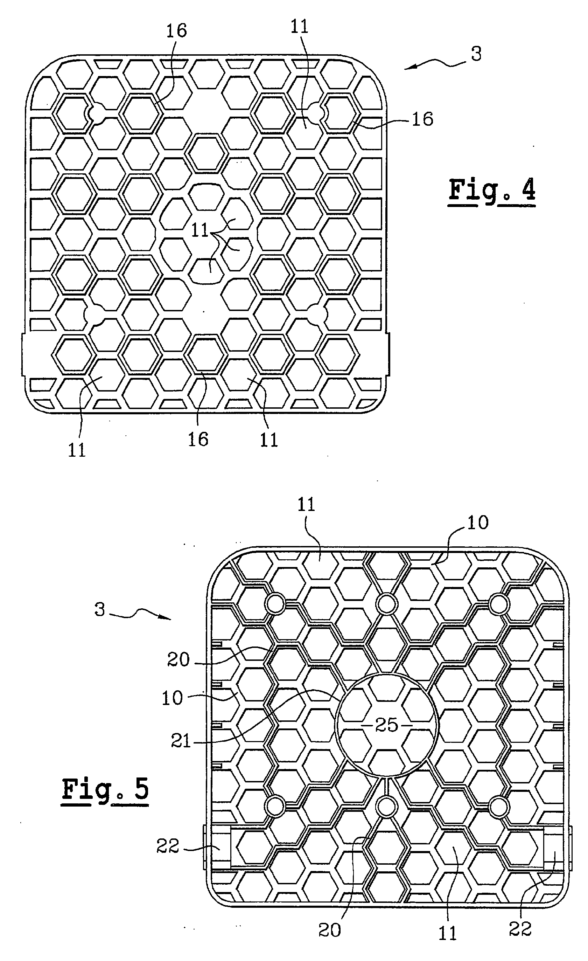

- la figure 4 est une vue schématique de dessus de la grille de la figure 1, et
- la figure 5 est une vue schématique de dessous de la grille de la figure 1.

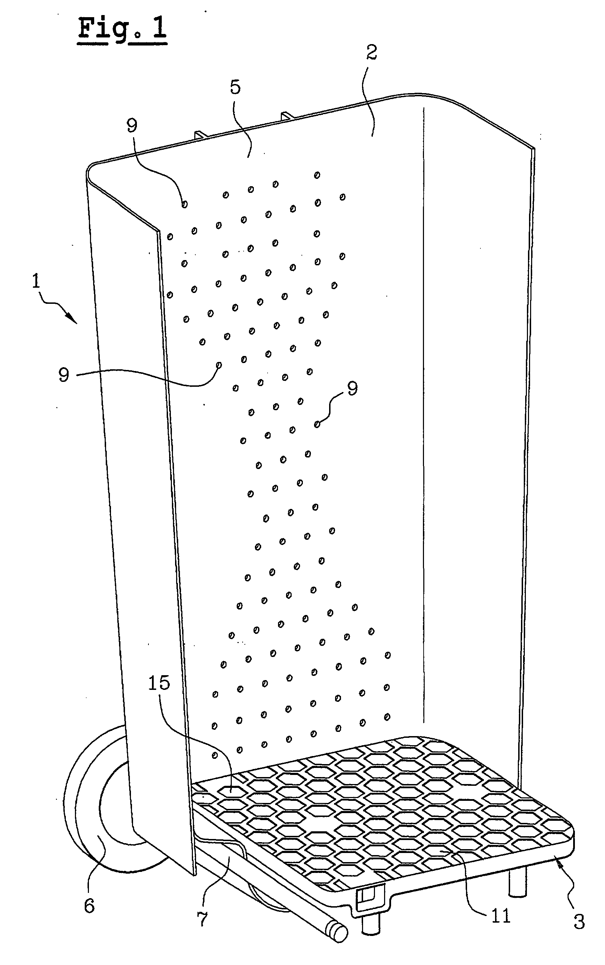

On a représenté sur la figure 1 un bac 1 destiné à la collecte de compost, conforme à l'invention, comportant une cuve 2 au fond de laquelle repose une grille 3 en matière plastique, destinée à permettre la décantation des déchets et leur aération, afin notamment de réduire les nuisances olfactives.

Le bac 1 comporte des parois latérales ajourées 5, traversées par des orifices 9 permettant le passage d'air entre l'intérieur et l'extérieur de la cuve 2, et en partie inférieure des roues 6 reliées par un arbre 7, de manière connue en soi.

La grille 3, réalisée par injection de matière plastique, par exemple une polyoléfine, notamment du polyéthylène haute densité, comporte une paroi généralement horizontale 10 qui est traversée par un réseau d'orifices 11 dont la grande majorité présente une section hexagonale complète.

Les orifices 11 sont agencés, pour la majorité d'entre eux, à la manière d'un nid d'abeilles.

La paroi 10 se raccorde sur son pourtour à une jupe périphérique 12 sensiblement verticale.

La grille comporte des pieds 13, au nombre de six dans l'exemple décrit, se raccordant supérieurement à la paroi 10 et destinés à venir en appui contre la paroi de fond du bac.

La grille 3 comporte en outre, sur deux côtés opposés, des logements 14 destinés à recevoir chacun un axe 15 fixé sur une paroi latérale 5 du bac, afin de permettre un pivotement autour d'un axe géométrique Y vers le haut de la grille 3 lorsque le bac est retourné pour être lavé.

La face supérieure de la paroi 10 est généralement plane, hormis la présence de nervures 16 entourant complètement certains orifices 11 de section hexagonale, un peu moins d'un orifice sur trois dans l'exemple illustré.

Les orifices 11 entourés par les nervures 16 sont répartis sur sensiblement toute la surface supérieure de la grille 3.

Dans l'exemple de réalisation décrit, les nervures 16 présentent un côté tourné vers l'orifice 11 correspondant qui se situe exactement dans l'alignement de celui-ci, ce qui évite la formation d'un décrochement susceptible d'accrocher des déchets.

Les nervures 16 sont chanfreinées à leur partie supérieure, de façon à éviter la présence d'arêtes susceptibles d'accrocher des déchets.

Dans l'exemple illustré, la hauteur des nervures 16 est de l'ordre de 3 mm, ce qui présente un bon compromis entre l'amélioration de l'aération et la limitation du risque d'accrochage des déchets par des parties trop saillantes.

La largeur des nervures 16, dans l'exemple illustré, est inférieure à celle des portions pleines qui séparent les orifices 11 adjacents.

La paroi 10 comporte des parties pleines au-dessus des pieds 13, ainsi qu'au-dessus des logements 14.

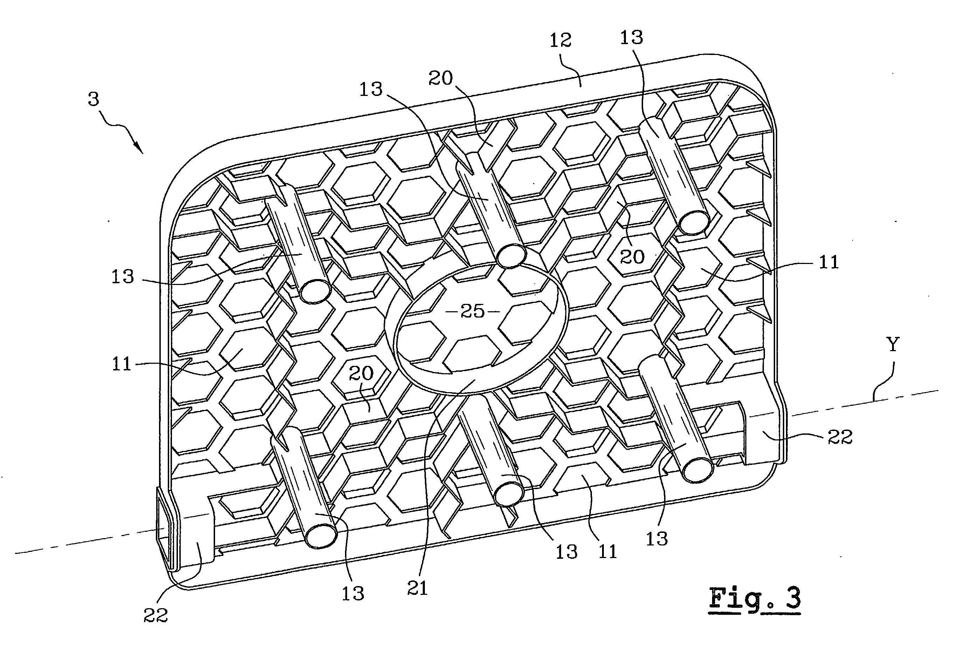

On remarquera que les orifices 11 situés à la périphérie de la grille 3 sont tronqués en raison de la présence de la jupe périphérique 12. Il en est de même de certains orifices 11 présents au centre de la grille, comme on le verra plus loin. Si l'on se reporte à la figure 3, on voit que la grille comporte sous la paroi 10 un ensemble de nervures de renforcement 20, qui s'étendent sur une partie seulement de la largeur des portions pleines qui séparent les orifices 11.

Une partie des nervures 20 se raccorde à une nervure circulaire 21 présente au centre de la grille. Certaines nervures 20 se raccordent également aux pieds 13 à la jupe périphérique 12 et aux parois 22 des logements 14.

Chaque nervure 20 s'étend en retrait des bords des orifices 11 adjacents, de manière à ne pas favoriser le coincement de déchets dans les orifices 11.

Les nervures 20 ont, dans l'exemple décrit, la même hauteur que la jupe périphérique 12, hormis les portions se raccordant aux pieds 13, qui présentent une hauteur plus importante.

La grille 3 comporte en son centre une partie pleine 25 qui peut recevoir sur sa face inférieure des indications concernant la fabrication de la grille, par exemple la date et un numéro de série, lors du moulage ou postérieurement à celui-ci.

Les orifices 11 qui s'étendent autour de la partie pleine 25 sont des hexagones tronqués, en raison de la présence de la nervure circulaire 21.

Bien entendu, l'invention n'est pas limitée à l'exemple de réalisation qui vient d'être décrit.

On peut notamment réaliser des orifices ayant une section autre qu'hexagonale, notamment une section polygonale non régulière ou comportant des côtés qui ne seraient pas tous rectilignes.

Le nombre de côtés peut être différent de celui décrit. Un nombre de côté inférieur à cinq n'est toutefois pas satisfaisant, car les angles aigus formés entre les côtés seraient alors susceptibles d'accrocher les déchets.

Les nervures réalisées sur la face supérieure de la grille pourraient être remplacées par d'autres reliefs.

La grille pourrait également comporter outre des orifices de section polygonale, notamment hexagonale, des orifices ayant une section non polygonale, par exemple circulaire ou elliptique.

## Revendications

1. Bac destiné à la collecte de déchets (1), notamment de compost, comportant une grille en matière plastique de fond de cuve (3), **caractérisé par le fait que** ladite grille (3) est traversée par une pluralité d'orifices (11) de section généralement polygonale, avec un nombre de côtés compris entre cinq et douze.

2. Bac selon la revendication précédente, **caractérisé par le fait que** la grille (3) comporte une pluralité d'orifices (11) de section généralement hexagonale.

3. Bac selon l'une des deux revendications précédentes, **caractérisé par le fait que** l'aire totale occupée par les orifices (11) de la grille (3) est supérieure à celle occupée par les régions pleines de 1a grille (3).

4. Bac selon l'une quelconque des revendications précédentes, **caractérisé par le fait que** la face supérieure de la grille (3) comporte des reliefs (16) faisant saillie vers le haut, au-dessus du plan des orifices (11).

5. Bac selon la revendication précédente, **caractérisé par le fait que** ladite grille (3) comporte des nervures (16) qui bordent au moins partiellement au moins certains orifices (11).

6. Bac selon la revendication précédente, **caractérisé par le fait que** lesdites nervures (16) entourent chacune un orifice et sont alignées avec le bord de l'orifice correspondant.

7. Bac selon l'une quelconque des revendications 4 à 6, **caractérisé par le fait que** la hauteur des reliefs (16) de la face supérieure est comprise entre 1 et 10 mm, de préférence entre 2 et 8 mm.

8. Bac selon l'une quelconque des revendications précédentes, **caractérisé par le fait que** la grille comporte des nervures de rigidification (20) sur sa face inférieure, situées de préférence en retrait du bord desdits orifices (11).

9. Bac selon la revendication précédente, **caractérisé par le fait qu'**aucun desdits orifices (11) n'est, isolément, complètement entouré par lesdites nervures de rigidification (20).

10. Bac selon l'une des deux revendications précédentes, **caractérisé par le fait que** la grille (3) comporte sensiblement en son centre, sur sa face inférieure, une nervure centrale généralement circulaire (21), à laquelle se raccordent des nervures de rigidification (20) s'étendant sensiblement jusqu'aux bords de la grille.

11. Bac selon la revendication précédente, **caractérisé par le fait que** ladite nervure centrale (21) entoure des orifices qui sont des polygones tronqués et une partie centrale pleine (25) qui sert à recevoir des indications concernant la fabrication.

12. Bac selon l'une quelconque des revendications 5 à 11, **caractérisé par le fait que** les nervures réalisées sur les faces inférieure et/ou supérieure de la grille (3) comportent des bords chanfreinés.

13. Bac selon l'une quelconque des revendications précédentes, **caractérisé par le fait que** ladite grille (3) comporte six pieds (13) destinés à reposer contre la paroi de fond du bac.

14. Bac selon la revendication précédente, **caractérisé par le fait que** la grille (3) comporte des parties pleines de forme généralement hexagonale, au-dessus desdits pieds (13).

15. Bac selon l'une des deux revendications précédentes, **caractérisé par le fait que** les nervures (20) présentes sur la face inférieure de la grille (3) se raccordent au moins à une partie de ces pieds, et de préférence à l'ensemble des pieds (13).

16. Bac selon l'une quelconque des revendications précédentes, **caractérisé par le fait que** ladite grille comporte sur deux côtés opposés des passages pour accueillir des axes d'articulation (15) fixés aux parois du bac et permettant à la grille de pivoter lorsqu'elle est en place dans le bac.

17. Bac selon l'une quelconque des revendications précédentes, **caractérisé par le fait qu'**il comporte des parois ajourées (5).

18. Grille destinée à équiper un bac tel que défini dans l'une quelconque des revendications précédentes.
